# EUROPEAN PATENT APPLICATION

(11) **EP 4 306 005 A1**
(43) Date of publication of application: **17.01.2024**
(21) Application number: 23185145.2
(22) Date of filing: 12.07.2023
(51) Int. Cl.: A47B 47/04, F16B 12/12, A47B 95/00

(54) **A SHELF MODULE AND AN ASSOCIATE SUSPENSION BRACKET IN BOARD MATERIAL**

(30) Priority: 14.07.2022 DK PA202200680
(71) Applicant: Hilbro ApS, 2100 København Ø (DK)
(72) Inventor: Christensen, Henrik Kurt, 2100 København Ø (DK); Rasmussen, Jannic Michael, 3400 Hillerød (DK)
(74) Representative: Larsen & Birkeholm A/S

(57) **Abstract**

The invention concerns a shelf module and an associated suspension bracket (2.) in board material, forming a shelving system by interlocking several shelf modules, comprising of a rear panel board (4.) with a number of horizontally and vertically elongated mortises (4.a) and with a suspension bracket (2.) which has a number of similar and corresponding mortises (2.b) and a vertical load bearing board (5.) with grip tenons (5.a) for insertion into the mortises (4.a) of the rear panel board (4.) and including a shelf board slot (5.f) and a horizontal shelf board (6.) with pinch tenons (6.a) for insertion into the mortises (4.a) of the rear panel board (4.) and a load bearing board slot (6.e) and where the shelf board slot (5.f) and the load bearing board slot (6.e) are intended to interlock.

For connecting several shelf modules, the edges of the load bearing board (5.) and the shelf board (6.) are made with dovetails (5.h) and (6.f), in which butterfly keys (8.) are inserted into two juxtaposed dovetails (5.h) or (6.f), thus creating stable vertical or horizontal interlock of the modules. Between two load bearing boards (5.) a supporting beam (7.) is attached in order to support two interlocked shelf boards (6.)

This provides a shelf module and an associated suspension bracket which can be manufactured in the same board material in a simple processing process and with joining methods based on detachable separate parts which easily can be replaced.

## Description

A shelf module and an associated suspension bracket in board material. By interlocking at least 4 similar shelf modules in both horizontal and vertical directions, attached to the associated suspension brackets, a modular shelving system with enclosed storage spaces can be formed, delimited by a rear panel board and by two side boards in the form of load bearing boards and by two shelf boards, - and a modular shelving system with open storage spaces in the periphery of any given combination of interlocked shelf modules, where the open storage spaces are either delimited by a rear panel board, a side board in the form of a load bearing board and a shelf board, or by a rear panel board, a side board in the form of a load bearing board as well as two shelf boards.

The shelf module and the associated suspension bracket are of the type made of board material and consists of a rear panel board, on to which a vertically positioned load bearing board and a horizontally positioned shelf board are attached perpendicular.

Most comparable types of modular shelving systems forming enclosed storage spaces, delimited by a rear panel board and by two side boards in the form of load bearing boards and two shelf boards, are the commonly known box shaped bookcases which are typically assembled according to the following 2 methods:
A. Pre-assembled, of which the separate parts of the box shaped bookcase or the shelving systems are joined with dowels, - with miter joints, - by finger joints or similar methods and/or with the use of permanent joining means such as e.g. glue, - nails, - U-shaped nails and/or different types of assembly brackets and the like. The joining methods described above require a variety of different materials and typically also require mechanical processing as well as other industrial or artisanal post-processing.
B. Disassembled, of which the end users themselves assembles the separate parts of the box shaped bookcase or the shelving systems according to the manufacturer's instructions. This method typically requires the use of one or more different types of assembly brackets, which with the use of supplementary joining means such as e.g. bushings and glue, are attached and integrated into the board material, which is why a significant board thickness is required to ensure the stability and durability of the joints.

The disadvantages of pre-assembled box shaped bookcases and shelving systems of this kind are that the joining methods described above and their joining means, typically are completely or partially irreversible and therefore preclude disassembly and replacement of worn or damaged individual parts, thereby reducing the overall lifetime of the box shaped bookcase.

When disposed of when worn out, and due to the permanent joining means applied, which consist of typically a variety of materials, this makes an environmentally optimal waste sorting difficult, as the separate parts cannot effectively be separated into pure waste fractions.

Another disadvantage is the larger amount of material needed, as double sided boards will occur when the box shaped bookcases are juxtaposed, and that the volume of fully assembled box shaped bookcases of the aforementioned type mainly are a void, which leads to an unnecessary amount of packaging materials needed and thus is space- and energy consuming during shipping.

The disadvantages of the known types of box shaped bookcases and disassembled shelving systems with enclosed storage spaces delimited by a rear panel board and by two side boards in the form of load bearing side boards and by two shelf boards, are also an increased amount of material needed for larger board thicknesses, including increased weight of the bookcases during shipping and handling in general.

For both pre-assembled and disassembled box shaped bookcases and shelving systems of this kind, mold growth can occur when fixed onto the inside of external walls, as known types of box shaped bookcases usually are fixed tightly to the surface, thereby obstructing natural ventilation of moisture and condensation between the wall surface and the rear panel board of the box shaped book case.

Furthermore, shelves of the type indicated previously are known from Czech utility model CZ9882U1_1999. This known shelf is described as being made of separate parts in a variety of materials, which entails a more complex manufacturing process in contrast to the invention, in which all the individual parts of the shelf module can be manufactured in the same material to achieve the intended function as a stable shelf construction.

Furthermore, the known shelf of the type indicated above requires that at least two vertical load bearing side boards must be attached to its rear panel board as a load bearing support for a number of shelves fixed between two opposing load bearing points, in order to achieve the intended function as a stable and functional shelf construction.

The applied invention differs fundamentally from this, in that only a single vertical load bearing board and a single horizontal shelf board are attached to its rear panel board. This unusual load bearing principle for shelves, achieves its function by the horizontal juxtaposition of at least two similar shelf modules and a supporting beam which is attached between the load bearing boards of two shelf modules, as a structural support for the shelf boards of two juxtaposed shelf modules.

Due to this, the term "shelf module" is consistently used in the title of the invention and in the patent claims, as the invention achieves its function by adding at least one more similar shelf module.

The present invention is thus modular in contrast to Czech utility model CZ9882U1_1999, which is a stand-alone object based on a traditional shelf construction, of which the shelf is formed by a coherent part attached between two load bearing points on the same rear panel board.

In the case of the invention of the type mentioned at the outset, a shelf module is formed in board material with fully detachable separate parts, which are attached perpendicularly to a rear panel board on an associated suspension bracket. The separate parts of the shelf module, including the associated suspension bracket, can be manufactured in the same board material without the use of auxiliary substances such as glue and similar adhesives, - without brackets, bushings, screws and the like and can be assembled without the use of tools. By vertically and/or horizontally interlocking several shelf modules, a modular and flexible shelving system with the functionality of box shaped bookcases is provided. Compared to known shelving systems of this kind, the invention described can be manufactured in a shorter and simpler process, as the shelf module and the associated suspension bracket only consist of the same material. The fully detachable separate parts make the replacement of worn or damaged separate parts easy, thereby extending the overall life of the shelf module and the associated suspension bracket. The shelf module and the associated suspension bracket can thus be repaired, reused or disposed of and recycled in pure waste fractions much easier and more rationally, since the separate parts are not irreversibly mixed with other materials.

According to the invention, this is achieved by a shelf module with an associated suspension bracket in board material of the type mentioned in the outset, characterized by that the rear panel board comprises of a number of horizontal and a number of vertically placed elongated mortises, which are placed with the long sides of these, perpendicular to the edges of the rear panel board and that the suspension bracket is placed on the back side of the rear panel board which includes a number of similar and corresponding mortises and that the load bearing board includes grip tenons intended for insertion into the vertical mortises of the rear panel board and into a shelf board slot and that the shelf board includes pinch tenons intended for insertion into the horizontal mortises of the rear panel board and into a load bearing board slot and where the shelf board slot and the load bearing board slot interlocks.

This creates a shelf module with open spaces on all sides, attached to an associated suspension bracket for fixing onto a vertical surface. By adding, juxtaposing and interlocking at least 4 similar shelf modules in both horizontal and vertical directions, a modular shelving system with enclosed storage spaces can be formed, delimited by a rear panel board and by two side boards in the form of load bearing boards and two shelf boards, - and a shelving system with open spaces in the periphery of any given combination of interlocked shelf modules, of which the open spaces are either delimited by a rear panel board, a load bearing board and a shelf board, or by a rear panel board, a load bearing board and two shelf boards. The shelf module is of the type that can be assembled and disassembled by the end users themselves. When attaching one or more shelf modules to the associated suspension brackets described, a gap is formed between each rear panel board and the vertical surface onto which the shelf modules are fixed, which both enables hidden cable routing, and when attached to the inside of external walls, a natural venting away of moisture and condensation, which prevents the growth of mold and similar health-damaging microorganisms.

In a particular embodiment according to the invention, on the board surface of the suspension bracket is attached one or more spacers with a board size smaller than the board size of the suspension bracket, so when both are fixed to a vertical surface, a gap is formed between the suspension bracket and the vertical surface onto which the suspension bracket is fixed.

Attaching one or more spacers to the back side of the suspension bracket, -ideally in the immediate area around the fastener - typically a metal screw by which the suspension bracket is fixed onto a vertical surface, creates a limited contact surface towards it. In practice, the limited contact surface of the spacers prevents any unevenness of the vertical surface onto which the shelf module and the associated suspension bracket are fixed, so that misalignments and material stresses formed between several interlocked shelf modules and their associated suspension brackets are avoided.

In a second embodiment according to the invention, there is a partial expansion in the board material in the form of a dovetail lap at the outermost part of the associated suspension bracket in the same directions as the mortises of the suspension bracket, formed with a neck which is narrow at the attachment of the dovetail lap at the suspension bracket and where the dovetail lap has an edge recess in the board material along the edges of the dovetail laps.

The dovetail laps are designed so that a spacer bracket, which is described in detail under patent claim 4, can be attached between the suspension brackets of two interlocked shelf modules, thus creating a dovetail joint.

In a third embodiment according to the invention, a spacer bracket are attached to the dovetail laps of the suspension bracket by a cutout in the two opposite sides of the spacer bracket in the shape of dovetails, which form the geometrically mirrored shape of the dovetail laps of the suspension bracket and the edge recesses of the dovetail laps.

By inserting a dovetail of a spacer bracket to one of the suspension bracket's dovetail laps, the two opposing edge recesses form a stable and demountable system which interlocks the suspension bracket and the spacer bracket into the same level. By joining a corresponding suspension bracket to the spacer bracket's opposite dovetail according to the aforementioned method, a precise distance between two suspension brackets is achieved for fastening and interlocking two juxtaposed shelf modules. The described method can be repeated infinitely in both the vertical and the horizontal direction.

In a fourth embodiment according to the invention, the load bearing board has a number of partial extensions in the surface of the board material, positioned and in dimensions fitting the mortises of the rear panel board and the mortises of the suspension bracket, made in the form of grip tenons with cutouts which form a gooseneck on each grip tenon, and that the cutout at each gooseneck has a width corresponding to the total board thickness of the rear panel board and the suspension bracket combined.

The grip tenons are intended for insertion into the mortises of the rear panel board and the associated suspension bracket and subsequent by vertically lowering the load bearing board in level with the rear panel board, whereby the goosenecks of the grip tenons grab the mortises and the associated suspension bracket and thus attach the rear panel board and the load bearing board in a vertical position and thereby transfers the weight load from the shelf module via the suspension bracket to the vertical surface onto which the suspension bracket is fixed.

In a fifth embodiment according to the invention, each grip tenon has, in the inner vertical cut of its gooseneck, a slight expansion in a partial area of the cutting surface of the board material in the form of a grip tenon bulge.

When the goosenecks of the grab tenons are lowered into the mortises of the associated suspension bracket, a slight deformation is formed against the board surface of the suspension bracket to which the grip tenon bulges are intended to be attached, so that both a stable hold is created for the associated suspension bracket and a sufficient friction against it, in such a way that the load bearing board and grip tenons can easily be detached.

In a sixth embodiment according to the invention, the shelf board has a number of partial extensions in the edge of the board material in the form of pinch tenons, positioned and with dimensions fitting to the mortises of the rear panel board and the mortises of the suspension bracket.

When inserting the load bearing board slot into the shelf board slot, the pinch tenons are inserted in the mortises of the rear panel board, whereby the load bearing board is interlocked to the rear panel board.

In a seventh embodiment according to the invention, each of the pinch tenons has, on one or both sides thereof, a slight expansion in a partial area of the edge of the material in the form of a pinch tenon bulge.

When the pinch tenons are inserted in the elongated mortises of the rear panel board and the associated suspension bracket, a slight deformation of the pinch tenon bulges against the short sides of the mortises is formed, in such a way that a stable hold is created to the rear panel board and sufficient friction against its mortises so that the shelf board and its pinch tenons can easily be detached.

In an eighth embodiment according to the invention, the load bearing board has a vertical cutout in the form of a beam slot, with an upper edge corresponding to the lower edge of the shelf board slot of the load bearing board.

The beam slots are intended for attachment of a beam spanning between two horizontally juxposed and interlocked shelf modules.

In a ninth embodiment according to the invention, a beam is made in the form of a supporting beam in a length corresponding to at least the center distance between the load bearing boards of two juxtaposed shelf modules in a board thickness corresponding to the width of a shelf beam slot.

When interlocking two shelf modules horizontally, the supporting beam is intended to be attached to the beam slots of the two load bearing boards, whereby the horizontal shelf boards of the two shelf modules are supported in the line where the opposing board edges are juxtaposed.

In a tenth embodiment according to the invention, at the bottom and top or either at the bottom and top of each load bearing board, there is a cut out in the board material in the shape of a dovetail, which has a neck which is narrow in width at the board edge and made with an edge recess in the board material along the edges of the dovetails.

The intention of the dovetails are that a piece of board in the shape of a butterfly key can be attached between two vertically juxtaposed load bearing boards.

In an eleventh embodiment according to the invention, at the opposite edges or either on one edge of the shelf board, there is a cut out in the board material in the shape of a dovetail, which has a neck that is narrow in width at the board edge and made with an edge recess in the board material along the edges of the dovetails.

The intention of the dovetails is that a piece of board in the shape of a butterfly key can be attached between two horizontally juxtaposed and interlocked shelf boards.

In a twelfth embodiment according to the invention, a piece of board in the shape of a butterfly key, which form the geometrically inverted figure of two juxtaposed dovetails and their edge recesses.

The butterfly key is intended to be attached into two juxtaposed dovetails and their opposite edge recesses, creating a stable and detachable shelving system which interlocks two load bearing boards to a stable vertical position in the same level and thus interlocks two shelf boards for a stable horizontal position.

In practice, the butterfly keys attached vertically in the dovetails of two load bearing boards will be held in position by the vertical weight load of the shelf modules, just as the butterfly keys attached horizontally in the dovetails of two shelf boards will be held in position by gravity and by the natural material stresses of the horizontally interlocked shelf boards.

In a thirteenth embodiment according to the invention, the rear panel board has a cutout in the form of a cable slot in one or more of the edges of the rear panel board, which are positioned opposite the short sides of the elongated mortises in the rear panel board, in such a way that board material is retained in the rear panel board between the cable slots and the mortises.

The intention of the cable slots are that a load bearing board with corresponding cable cutouts is attached to the rear panel board and a shelf board with corresponding cable cutouts is attached to the rear panel board, thus forming a cable hole through which a cable can be wired for concealed cable routing in the gap between two or more interlocked shelf modules and the vertical surface, onto which the shelf modules and the associated suspension brackets are fixed.

In a fourteenth embodiment according to the invention, the load bearing board and the shelve board are made with cutouts in the form of a cable corner on one or both sides of the corners of the load bearing board and the shelve board towards the edge where the grip tenons of the load bearing board and the pinch tenons of the shelve board are positioned.

When attaching a load bearing board and a shelve board to the rear panel board as well as the associated suspension bracket for creating a complete shelf module, a cable hole is thus formed when interlocking two or more shelf modules juxtaposing the cable slots of the rear panel board and the cable corners of the load bearing board and the shelve board, creating a gap between the shelf modules and the vertical surface onto which the shelf modules and the associated suspension brackets are fixed.

The cable holes are intended for consealed routing of a variety of cables, e.g. electricity and sound

In a fifteenth embodiment according to the invention, the spacer bracket is made with a cable hole, located at the center the cable hole of two interlocked shelf modules, created by the cable slots of two rear panel boards and by the cable corners of two load bearing boards or the cable slots of two rear panel boards and the cable corners of two shelve board corners.

The intention of the cable holes are that a cable with an attached plug can be lead through a cable hole of the shelf modules, and through the cable hole of the spacer bracket to the gap between the shelf modules and the vertical surface onto which the shelf modules and the associated suspension bracket are fixed.

In a sixteenth embodiment according to the invention, the associated suspension bracket is made in the form of a attachment bracket, having a single mortise in a dimension corresponding the mortises of the rear panel board and as a coupling bracket which has two mortises in dimensions corresponding the mortises of the rear panel boards, located and in dimensions corresponding to the mortises of two interlocked rear panel boards.

The attachment brackets are intended for attachment to the rear panel board to each of the mortises towards the directions where another shelf module is not juxtaposed and interlocked, so that the grib tenons of a load bearing board or the pinch tenons of a shelf board can be inserted and attached using the same method as described under embodiment 5-8 and by attaching a coupling bracket to the rear panel board to the mortises of two juxtaposed shelf modules, so that the grip tenons of a load bearing board or the pinch tenons of a shelf board can be inserted and attached according to the same method as described under embodiment 5-8.

This interlocks two or more shelf modules which can be placed freely on a horizontal surface.

In a seventeenth embodiment according to the invention, the rear panel board as well as each attachment bracket and each coupling bracket are made with a number of corresponding dowel pin holes.

By inserting elongated rigid items such as dowel pins into the dowel pin holes, these are intended to form a stable hold of the attachment brackets and the coupling brackets to the mortises of the rear panel board, creating a stable hold of the grip tenons of the load bearing board and the pinch tenons of the shelve board when attaching these.

In a eighteenth embodiment according to the invention, a dowel pin hole is made in each of the grip tenons of the load bearing board and in each of the pinch tenons of the shelve board which corresponds in location and dimension to the dowel pin recess of the attachment bracket and the dowel pin recess of the coupling bracket when attaching both to the mortises of the rear panel board and the mortises of the attachment bracket and the mortises of the coupling bracket.

The dowel pin holes are intended for insertion of an elongated item such as a dowel pin into each dowel pin hole.

In a nineteenth embodiment according to the invention, a dowel pin recess in the form of a linear recess, is made in the surface of the board material of the attachment bracket and the coupling bracket perpendicular to each mortise of the attachment bracket and perpendicular to each mortise of the coupling bracket.

The dowel pin recesses are, by horizontal insertion of an elongated, rigid object such as a dowel pin, through the dowel pin hole of the grip tenon into the dowel pin recess of the attachment bracket, or by vertically insertion of a dowel pin through the dowel pin hole of the pinch tenon into the dowel pin recess of the coupling bracket, intended to interlock the load bearing board and the shelve board onto the rear panel board and the attachment bracket and thus interlocking a shelf module. The same applies when attaching a coupling bracket vertically or horizontally to the rear panel boards between the mortises of two juxtaposed rear panel boards when placed independently on a horizontal surface.

In a twentieth embodiment according to the invention, there is an associated drawer system mounted on drawer slides, made with a back panel board which is higher than the side panel boards of the drawer and higher than the lower edge of the supporting beam of the shelf module.

Hereby, the drawer is intended to prevent unintentionally full drawer pull-out, as the back panel board of the drawer is blocked when it touches the supporting beam of the shelf module.

The invention is explained in detail below with reference to the drawings, where:
Fig. 1.1 - 1.2 show the separate individual parts of a shelf module and an associated suspension bracket in board material as well as separate parts for interlocking the shelf module with similar shelf modules.
Fig. 1.3 - 1.4 show a fully attached shelf module and an associated suspension bracket in board material as well as the separate parts for interlocking the shelf module with similar shelf modules.
Fig. 1.5 shows two vertically interlocked shelf modules and the associated suspension brackets fixed to a vertical surface.
Fig. 2.1 - 2.4 shows details of the grip tenons of the load bearing board and the pinch tenons of the shelf board as well as their attachment to the rear panel board and the mortises of the suspension bracket.
Fig. 3.1 - 3.3 show the horizontal interlocking of two shelf modules in a detached and attached state.
Fig. 4.1 - 4.5 shows details of the juxtaposed dovetails of the load bearing board and the shelf board as well as the attachment of butterfly keys into these.
Fig. 5.1 - 5.2 show the principle for interlocking several shelf modules horizontally and vertically.
Fig. 6.1 - 6.5 show details of the cable holes, created by the cable slots of the rear panel board and the cable corners of the load bearing board and the shelf board in detached and interlocked state.
Fig. 7.1 - 7.2 show two horizontally interlocked shelf modules for a freely placement on a horizontal surface with attachment brackets and coupling brackets in detached and interlocked states respectively.
Fig. 7.3 - 7.4 show the interlocking of grip tenons and pinch tenons to the attachment brackets and the coupling brackets with the dowel pins in the dowel recesses, as well as the principle of interlocking of several shelf modules horizontally and vertically with coupling brackets.
Fig. 8.1 - 8.3 show a section of two vertically interlocked shelf modules with a drawer mounted on drawer slides in a closed drawer position and in a partially open drawer position, where the drawer is blocked when touching the supporting beam of the shelf module.

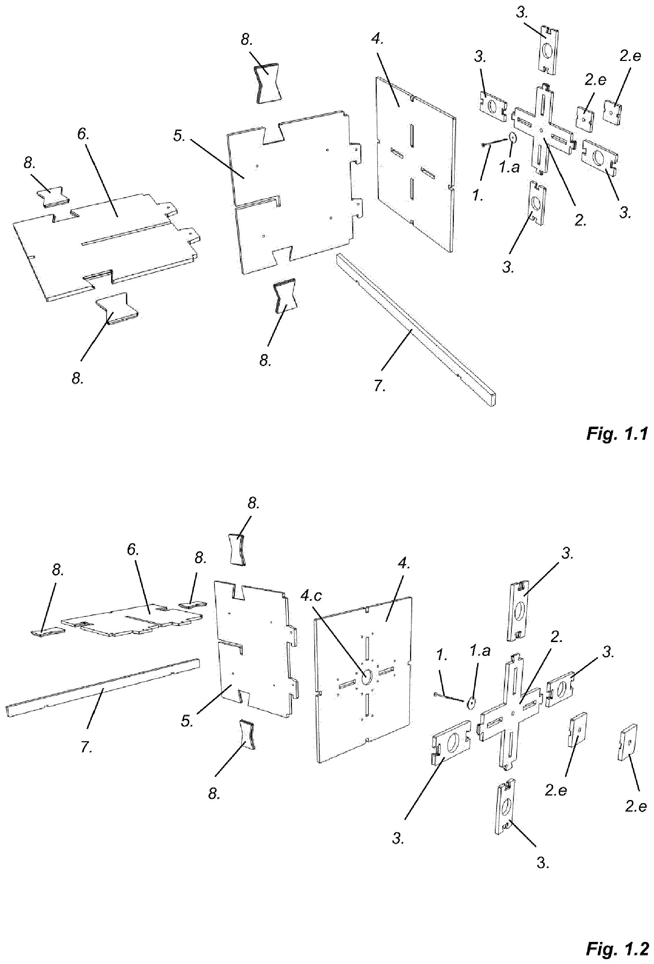

In fig. 1.1 is seen obliquely from the front in perspective, an overview with all the separate parts in a detached position to form a shelf module and an associated suspension bracket. From right to left, are seen a suspension bracket (2.) with associated spacers (2.e) and a fastener (1.) - typically a metal screw and an associated washer (1.a) which act as a counter to the board material of the suspension bracket when fixing this onto a vertical surface. On the back of the rear panel board (4.) is shown a bracket recess (4.c) in the board material, which accommodates the height of, for example a screw head on a fastener (1.) and a washer (1.a), so that the rear panel board (4.) and the suspension bracket (2.) can be attached with full contact against each other. A series of spacer brackets (3.) for interlocking the suspension brackets (2.) are shown in the possible expansive directions of the shelf module vertically and horizontally. A rear panel board (4.) is shown, to which a load bearing board (5.) and a shelf board (6.) are attached. On both sides of the load bearing board (5.) and the shelf board (6.) are shown the butterfly keys (8.) which are intended to interlock the load bearing boards (5.) and the shelf boards (6.) of the shelf modules, as well as a supporting beam (7.) which is attached between two load bearing boards (5.) as support of two shelf boards (6.) in the line where the opposing board edges are juxtaposed.

In fig. 1.2 is seen obliquely from behind in perspective, an overview with all separate parts in a detached position to form a shelf module and an associated suspension bracket as shown in fig. 1.1.

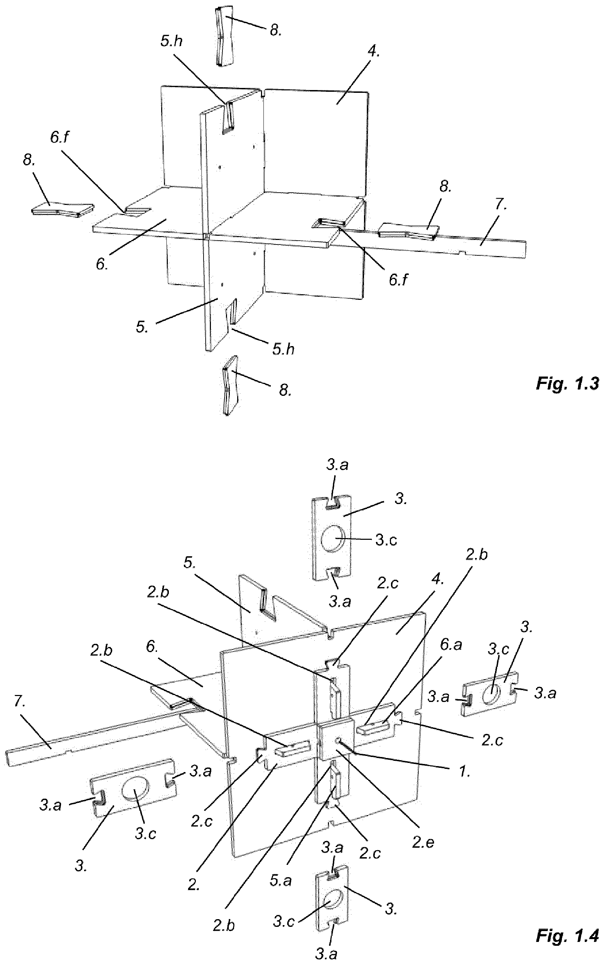

In fig. 1.3 is seen from the front in perspective a shelf module in an attached position, in which the load bearing board (5.) and the shelf board (6.) are joined at a 90 degree angle and attached perpendicularly to the rear panel board (4.). Attached to the load bearing board (5.) is shown a supporting beam (7.) which is intended to interlock two shelf modules horizontally, supporting the two shelf boards (6.) of these. On both sides of the load bearing board (5.) are shown the dovetails (5.h) and correspondingly the dovetails (6.f) of the shelf board (6.), in which the butterfly keys (8.) are attached for interlocking two or more shelf modules horizontally or vertically.

In fig. 1.4 is seen from behind in perspective a shelf module with an associated suspension bracket (2.) in an attached position, in which one or more spacers (2.e) are attached to the board surface of the suspension bracket (2.), through which a fastener (1.), shown as a screw for fixing both onto a vertical surface. A rear panel board (4.) is attached to the suspension bracket (2.), through which the grip tenons (5.a) of the vertical load bearing board (5.) are inserted in the mortises of the rear panel board and the mortises (2.b) of the suspension bracket (2.), whereby the grip tenons (5.a) creates a hold of the load bearing board (5.) and the rear panel board (4.) to the suspension bracket (2.) in a vertical position.

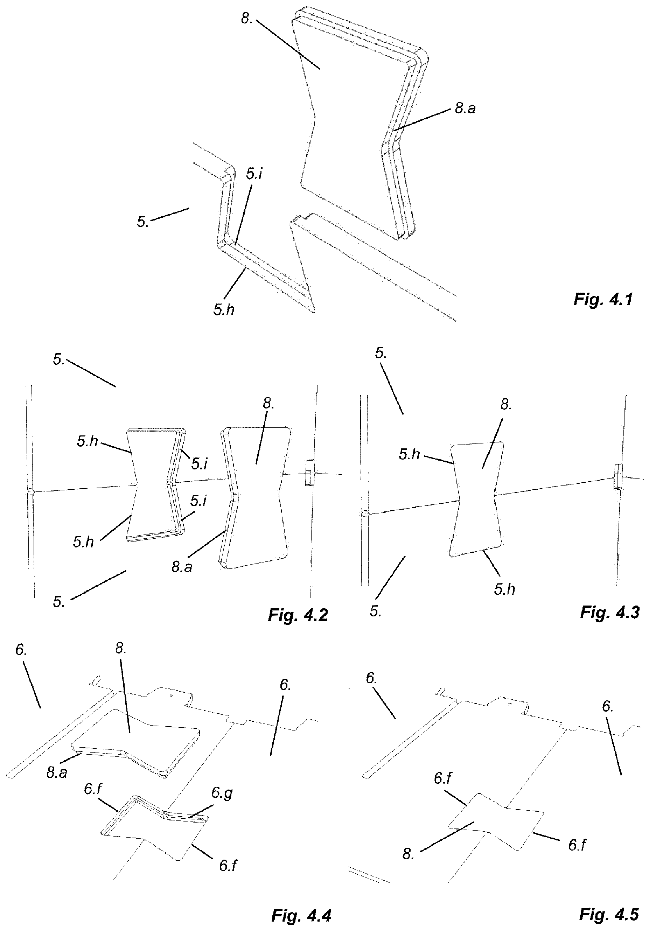

On the rear panel board (4.) and the load bearing board (5.) which are attached to the suspension bracket (2.), are shown the pinch tenons (6.a) of the horizontal shelf board (6.) which are inserted through the mortises of the rear panel board (4.) and the mortises (2.b) of the suspension bracket (2.), whereby the pinch tenons (6.a) interlock the load bearing board (5.) and the rear panel board (4.) to the suspension bracket (2.). Separated from the suspension bracket (2.) in the horizontal and vertical directions, a number of spacer brackets (3.) with dovetails (3.a) are shown, which, when adding one or more suspension brackets (2.) are intended to be attached into the dovetail laps (2.c) of the suspension bracket (2.) and thus maintains the precise distance between two shelf modules when interlocked. Details are shown in fig. 4.1 - 4.3.

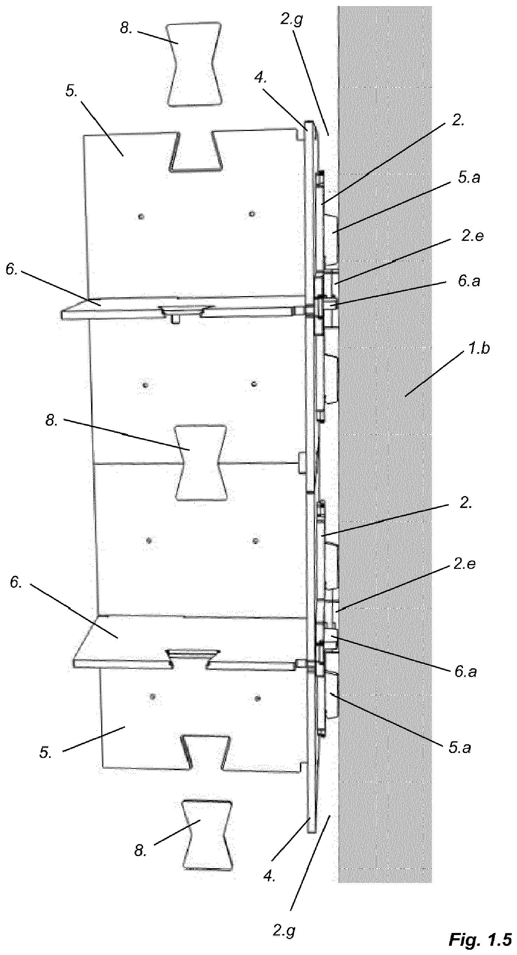

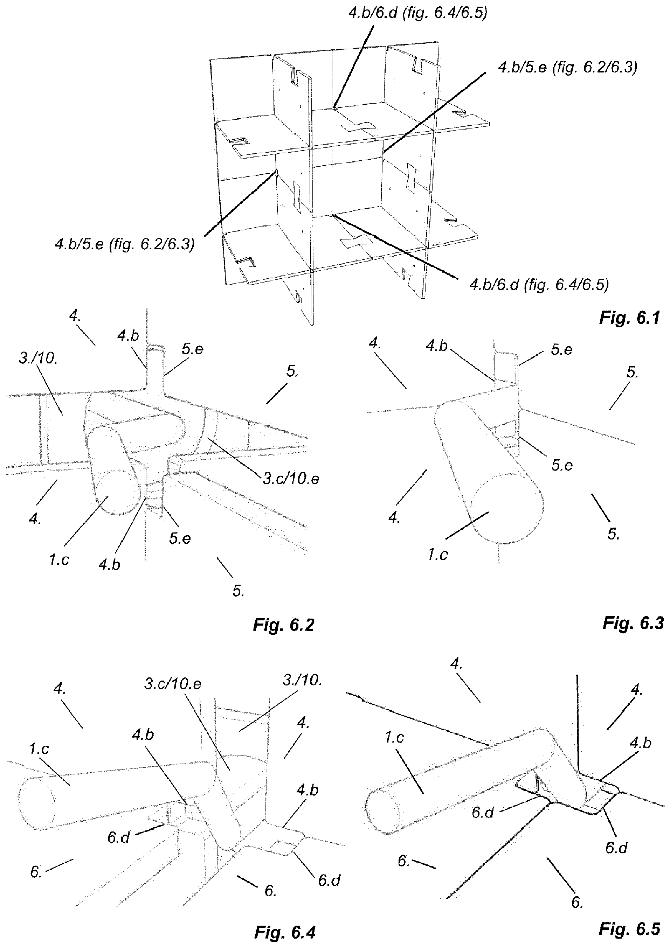

In fig. 1.5 is seen in section two vertically interlocked shelf modules and the associated suspension brackets (2.) fixed to a vertical surface (1.b), where for example two spacers (2.e) are attached to the board surface of the suspension bracket (2.) in a dimension corresponding to the minimum length of the grip tenons (5.a) and the pinch tenons (6.a) when attached to the rear panel board (4.) and the suspension bracket (2.) so these do not touch the vertical surface (1.b) onto which the shelf module and the associated suspension bracket (2.) is fixed. With this suspension principle, a gap (2.g) is created between the rear panel board (4.) and the suspension bracket (2.) and the vertical surface (1.b), which enables, for example the routing of cables in the gap (2.g) as shown in fig. 6.1 - 6.5.

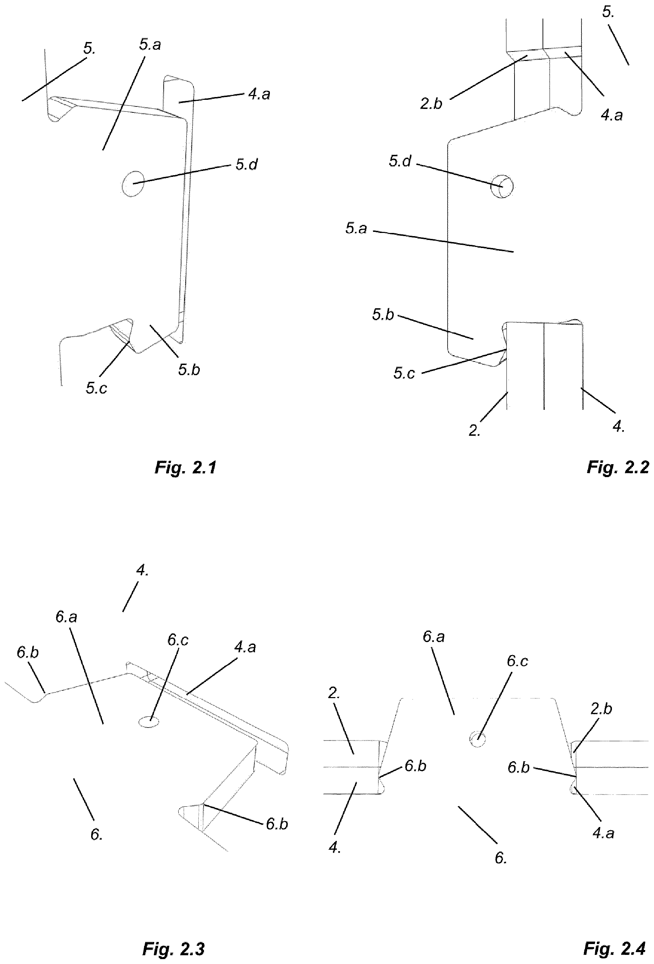

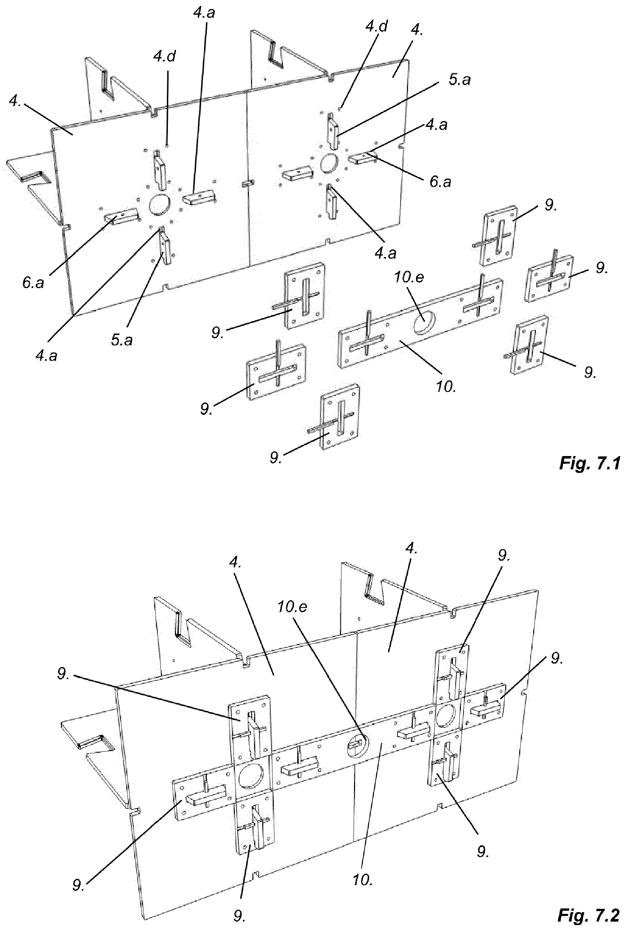

In fig. 2.1 is seen in perspective from the side in detached position, a detail with a grip tenon (5.a) of a load bearing board (5.) which has a gooseneck (5.b) with a grip tenon bulge (5.c) for insertion into a mortise (4.a) of the rear panel board. In addition, a dowel pin hole (5.d) is seen in the grip tenon (5.a) for use with the attachment bracket (9.) and the coupling bracket (10.) as shown in fig. 7.1 - 7.4.

In fig. 2.2 is seen in a vertical section in attached position, a detail with a grip tenon (5.a) of a load bearing board (5.) which is inserted into a mortise (4.a) of the rear panel board (4) and a mortise (2.b) of the suspension bracket (2.) and then lowered in both mortises (2.b and 4.a), whereby the gooseneck (5.b) creates a hold to the back of the surface of the suspension bracket (2.) and thus tie the load bearing board (5.) and the rear panel board (4.) to the suspension bracket (2.). The grip tenon bulge (5.c) of the gooseneck (5.b) creates, with a slight deformation of the grip tenon bulge (5.c) in the position shown where the grip tenon bulge (5.c) is lowered along the back of the board surface of the suspension bracket (2.), a stable hold to the suspension bracket (2.) and enough friction between the contact surface of the grip tenon bulge (5.c) and the board material of the suspension bracket (2.) for disassembly. Fig. 2.2 also applies to the attachment of the load bearing board (5.) and the rear panel board (4.) to the attachment bracket (9.) and the coupling bracket (10.).

In fig. 2.3 is seen in perspective from above in detached position, a detail with a pinch tenon (6.a) of the shelf board (6.) with pinch tenon bulges (6.b) on both sides of this for insertion into a mortise (4.a) of the rear panel board (4.). In addition, a dowel pin hole (6.c) is seen in the pinch tenon for the use with the attachement bracket (9.) and coupling bracket (10.) shown in fig. 7.1 - 7.4.

In fig. 2.4 is seen in a horizontal section in the attached position, a detail where a pinch tenon (6.a) of a shelf board (6.) is inserted into a mortise (4.a) of a rear panel board (4.) and into a mortise (2.b) of a suspension bracket (2.), whereby the pinch tenons (6.a) interlock the load bearing board (5.) and the rear panel board (4.) to the suspension bracket (2.). The pinch tenon bulges (6.b) of the pinch tenon (6.a) creates a slight deformation of the grip tenon bulges (6.b) towards the short sides of the cutting surface of the mortise (4.a) of the rear panel board (4.), due to the minimal contact surface in the position shown, making a both stable hold to the mortise (4.a) and enough friction between the contact surface of the pinch tenon bulges (6.b) and the cutting surfaces of the mortise (4.a) for disassembly. Fig. 2.4 also applies to the attachment of the load bearing board (5.) and rear panel board (4.) to the attachment bracket (9.) and the coupling bracket (10.).

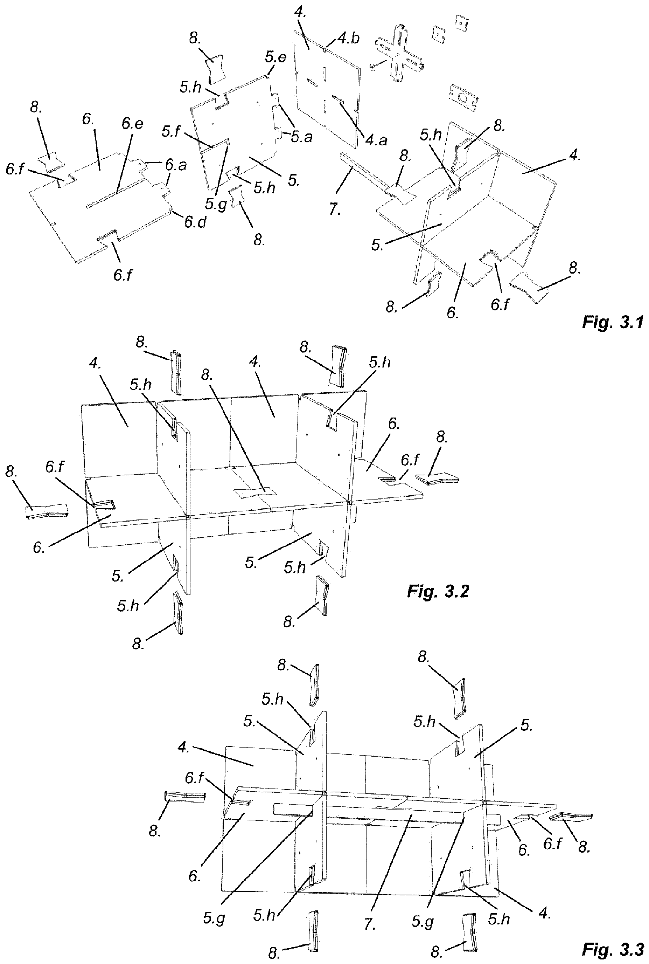

In fig. 3.1 is seen obliquely from above in perspective, two shelf modules separated in the horizontal position. One shelf module is shown with all the separate parts in a detached position, while the other shelf module is shown with all individual parts in an attached position. At the top, from right to left, is shown a detached shelf module with a rear panel board (4.) with vertical and horizontal mortises (4.a), as well as cable slots (4.b) at the board edges opposing the short sides of the elongated mortises ( 4.a). The load bearing board (5.) is seen with a shelf board slot (5.f), in which the load bearing board slots (6.e) of the shelf board (6.) are intended to interlock. Towards the rear panel board (4.) the grip tenons (5.a) of the load bearing board (5.) are shown, and the dovetails (5.h) at the bottom and top of the load bearing board (5.), in which the butterfly keys (8.) are inserted flush with the surfaces of the load bearing boards by interlocking the dovetails (5.h) of two juxtaposed load bearing boards (5.). On both edges of the shelf board (6.) are shown the dovetails (6.f), in which the butterfly keys (8.) using the same method as mentioned regarding the dovetails (5.h) of the load bearing board (5.), are inserted flush with the surfaces of the shelf board by attaching the dovetails (6.f) of two juxtaposed shelf boards (6.).

Obliquely to the right, below the detached shelf module is shown a shelf module with the above mentioned separate parts in the attached position with a supporting beam (7.) attached to the load bearing board (5.) into a beam slot (5.g) and a butterfly key (8.) inserted into the dovetail (6.f) of the shelf board (6.) juxtaposing the detached shelf module and flush with the surface of the shelf board (6.).

At the bounding edges of the load bearing boards (5.) and the shelf boards (6.), to witch the shelf modules are not intended to be interlocked, either half size butterfly keys are inserted into the dovetails (5.h) of the load bearing boards (5.) and the dovetails (6.f) of the shelf boards (6.) or the delimiting board edges are made as unbroken board edges without dovetails (5.h) and (6.f).

Fig. 3.1 also applies to the attachment of the load bearing board (5.) and rear panel board (4.) to the attachment brackets (9.) and coupling brackets (10.). In fig. 3.2 is seen from the front in perspective, two horizontally interlocked shelf modules with the separate parts as described in fig. 3.1.

In fig. 3.3 is seen from the front in perspective, the underside of two horizontally interlocked shelf modules with the separate parts as described in fig. 3.1. as well as a supporting beam (7.) which supports the two shelf boards (6.) along the edge where both are juxtaposed and where a supporting beam (7.) is fixed in the beam slots (5.g) of the two load bearing boards (5.). The supporting beam (7.) shown has a supporting length under both of the two outermost shelf boards(6.), which counteracts vertical deflection of the shelf board areas. The supporting beam (7.) shown is also used for the interlocking of two shelf modules horizontally, while other lengths of supporting beams are used for interlocking three or more shelf modules horizontally.

In fig. 4.1 is seen from the side in perspective in a detached position, a detail of a cutout in the load bearing board (5.) in the shape of a dovetail (5.h), in which an edge recess (5.i) are made in the board material along the edges of the dovetail (5.h). Separated from the load bearing board (5.), a butterfly key (8.) with a corresponding edge recess (8.a) can be seen.

The detail of this is identical to the dovetails (6.f) of the shelf board (6.) and the dovetails (3.a) of the spacer bracket (3.) and the dovetail laps (2.c) of the suspension bracket (2.), shown in fig. 1.4.

In fig. 4.2 seen from the side in perspective in a detached position, a detail of the dovetails (5.h) of two vertically juxtaposed load bearing boards (5.) with edge recesses (5.i) and a butterfly key (8.) with an edge recess (8.a), which forms the geometrically mirrored shape of each other.

In fig. 4.3 is seen from the side in perspective in the interlocked position, a detail of the separate parts shown in fig. 4.2, in which a butterfly key (8.) is inserted in the dovetails (5.h) of two juxtaposed load bearing boards (5.) flush with the board surfaces. With these two juxtaposed edge recesses (8.a) and (5.i), a stable and detachable attachment is formed towards the edge recess (8.a) of the butterfly key (8.a), which, by the natural load pressure of the shelf modules, interlocks the two load bearing boards (5.) into a stable vertical construction.

In fig. 4.4 is seen from above in perspective in a detached position, a detail of the dovetails (6.f) of two horizontally juxtaposed shelf boards (6.) and a butterfly key (8.), which is identical with the one shown in fig. 4.2.

In fig. 4.5 is seen from above in perspective in the attached position, a detail of the individual parts as shown in fig. 4.4, in which a butterfly key (8.) is inserted in level with the board surface into the dovetails (6.f) of two juxtaposed shelf boards (6.). With these two juxtaposed edge recesses (8.a) and (6.g), a stable and detachable attachment is formed towards the edge recess (8.a) of the butterfly key (8.), which, by gravity and the natural tensions within the board material, interlocks the two shelf boards (6.) into a stable horizontal construction.

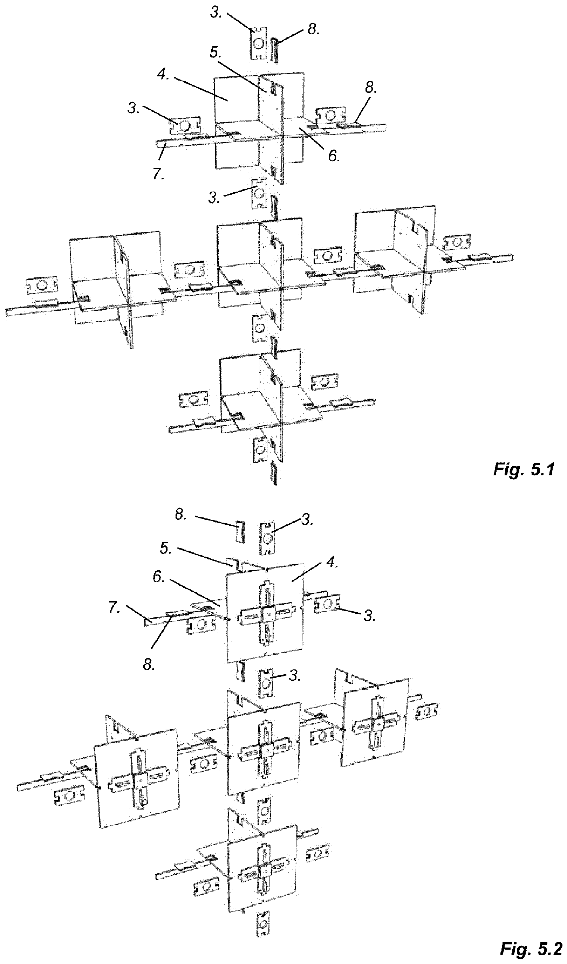

In fig. 5.1 is seen from the front in perspective, the principle of vertical and horizontal interlocking of several shelf modules with spacer brackets (3.), supporting beams (7.) and butterfly keys (8.), with the separate parts and details as shown in fig. 1.1 - 1.5, 2.1 -2.4, 3.1 - 3.3 and 4.1 - 4.5.

In fig. 5.2 is seen from behind in perspective, the principle of vertical and horizontal interlocking of several shelf modules with spacer brackets (3.), supporting beams (7.) and butterfly keys (8.), with the separate parts and details as shown in fig. 1.1 - 1.5, 2.1 - 2.4, 3.1 - 3.3 and 4.1 - 4.5.

In fig. 6.1 is seen from the front in perspective, a combination of two by two interlocked shelf modules, which forms a cable hole towards the gap (2.g) at the rear side of the shelf modules by juxtaposing the cable corners (5.e) of two load bearing boards (5.) and by juxtaposing the cable slots (4.b) of two rear panel boards (4.). The same applies by juxtaposing the cable corners (6.d) of two shelf boards (6.) and by juxtaposing the cable slots (4.b) of two rear panel boards (4.)

In fig. 6.2 is seen from the side in perspective in the detached position, a detail with the cable slots (4.b) of two vertically juxtaposed rear panel boards (4.), on to which a load bearing board (5.) with cable corners (5.e) is attached. Behind these is shown a spacer bracket (3.), in which a cable hole (3.c) or a coupling bracket (10) with an identical cable hole (10.e) is made, in a dimension corresponding at the minimum to the outer dimension of a 3-prong power plug. A cable is shown lead through the juxtaposed cable slots (4.b), the cable corners (5.e) and the cable hole (3.c) or (10.e).

In fig. 6.3 is seen in perspective from the side in the attached position, a detail of the separate parts shown in fig. 6.2, which by interlocking two shelf modules vertically, forms an opening to the rear side of the shelf modules as a cable hole (4.b), (5.e) and (3.c) or (10.e), through which an electric cable attached with a 3-prong power plug can be lead, as the cable hole (4.b), (5.e) and (3.c) or (10.e) is formed by embracing the electric cable from two sides. Through the cable hole (4.b), (5.e) and (3.c) or (10.e) is shown a cable, for example a 230 volt electric cable.

In fig. 6.4 is seen in perspective from the side in the detached position, a detail with the cable slots (4.b) of two horizontally juxtaposed rear panel boards (4.), on to which a shelf board (6.) with cable corners (6.d) is attached. Behind these is shown a spacer bracket (3.), in which a cable hole (3.c) or a coupling bracket (10.) with an identical cable hole (10.e) is made, in a dimension corresponding at the minimum to the outer dimension of a 3-prong power plug. A cable is shown lead through the juxtaposed cable slots (4.b), the cable corners (6.d) and the cable hole (3.c) or (10.e).

In fig. 6.5 is seen in perspective from the side in the attached position, a detail of the separate parts shown in fig. 6.4, which by interlocking two shelf modules horizontally, forms an opening to the rear side of the shelf modules as a cable hole (4.b), (6.d) and (3.c), through which an electric cable attached with a 3-prong power plug can be lead, as the cable hole (4.b), (6.d) and (3.c) or (10.e) is formed by embracing the electric cable from two sides. Through the cable hole (4.b), (6.d) and (3.c) or (10.e) is shown a cable, for example a 230 volt electric cable.

In fig. 7.1 - 7.4 are shown the attachment of the separate parts and the interlocking of shelf modules for freely placement on a horizontal surface using attachment brackets (9.) and coupling brackets (10.) instead of the previously shown suspension bracket (2.).

In fig. 7.1 is seen from behind in perspective, two horizontally interlocked shelf modules with the grip tenons (5.a) of the load bearing boards (5.) and the pinch tenons (6.a) of the shelf boards (6.), inserted through the mortises (4.a) of the rear panel board (4.), which have a series of dowel pin holes (4.d). Also shown are a number of attachment brackets (9.) and a coupling bracket (10.) in a detached position.

In fig. 7.2 is seen from behind in perspective, two horizontally interlocked shelf modules with attachment brackets (9.) attached into the dowel pin holes (4.d) of the rear panel boards (4.), where the grip tenons (5.a) of the load bearing boards (5.) are inserted through the mortises (4.a) of the rear panel board (4.) and attached into the mortises (9.a) of the attachment brackets (9.) according to the same method as shown in fig. 2.1 - 2.4. The same applies to the pinch tenons (6.a) of the shelf boards (6.) which are inserted through the mortises (4.a) of the rear panel board (4.) and through the mortises (9.a) of the attachment brackets (9.) and attached into the mortises (4.a) of the rear panel board (4.) according to the same method as shown in fig. 2.1 - 2.4.

Also shown is a connecting horizontal coupling bracket (10.) with a cable hole (10.e) attached between the juxtaposed mortises (4.a) of the rear panel boards (4.) of two interlocked shelf modules, according to the same method as described for the attachment brackets (9.).

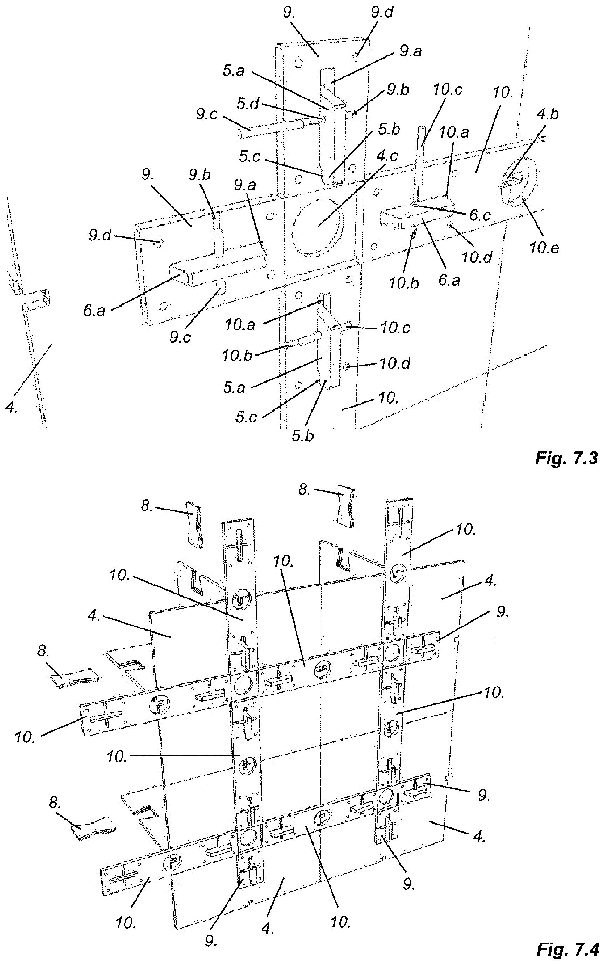

In fig. 7.3 is seen from behind in perspective, the separate parts of a single shelf module, which is shown in an interlocked position with another shelf module in fig. 7.2, in which fig 7.3 constitutes an upper corner module.

In the corner shown, two attachment brackets (9.) with dowel pin holes (9.d) are attached to the rear panel board (4.) both having a mortise (9.a) corresponding to the mortises (4.a) of the rear panel board (4.) , in which a dowel pin recess (9.b) is made as a linear recess in the surface of the board material, perpendicular to each mortise (9.a) as well as a corresponding dowel pin hole (5.d) in the grip tenons (5.a) of the load bearing board (5.) and a dowel pin hole (6.c) in the pinch tenons (6.a) of the shelf board (6.). For interlocking two shelf modules, a coupling bracket (10.) with dowel pin holes (10.d) are attached to the rear panel board (4.) having two mortises (10.a) corresponding to the mortises (4.a) of the rear panel board (4.), in which a dowel pin recess (10.b) is made as a linear recess in the surface of the board material, perpendicular to each mortise (10.a) as well as a corresponding dowel pin hole (5.d) in the grip tenons (5.a) of the load bearing board (5.) and a dowel pin hole (6.c) in the pinch tenons (6.a) of the shelf board (6.). By horizontal insertion of a dowel pin (9.c) through the dowel pin hole (5.d) of the grip tenon (5.a) in the dowel pin recess (9.b) of the attachment bracket (9.) or by vertical insertion of a dowel pin (9.c) through the dowel pin hole (6.c) of the pinch tenon (6.a) in the dowel pin recess (9.b) of the attachment bracket (9.), the load bearing board (5.) and the shelf board (6.) are interlocked to the rear panel board (4.) as well as to the attachment bracket (9.) thus ensuring a stable hold as shown with the dowel pins (9.c) before insertion and after insertion into the dowel pin holes (5.d) and (6.c).

The same applies when inserting dowel pins (10.c) through the dowel pin hole (5.d) of the grip tenons (5.a) in the dowel pin recess (10.b) of the coupling bracket (10.) or by vertical insertion of dowel pins (10.c) through the dowel pin hole (6.c) of the pinch tenon (6.a) in the dowel pin recess (10.b) of the coupling bracket (10.), the load bearing board (5.) and the shelf board (6.) are interlocked to the rear panel board (4.) as well as to the coupling bracket (10.) thus ensuring a stable hold as shown with the dowel pins (10.c) before insertion and after insertion into the dowel pin holes (5.d) and (6.c).

In fig. 7.4 is seen from the rear in perspective, an example of a combination with two by two interlocked shelf modules, as an illustration of a possible expansion with several shelf modules by using coupling brackets (10.) and butterfly keys (8.) in the left and upward direction.

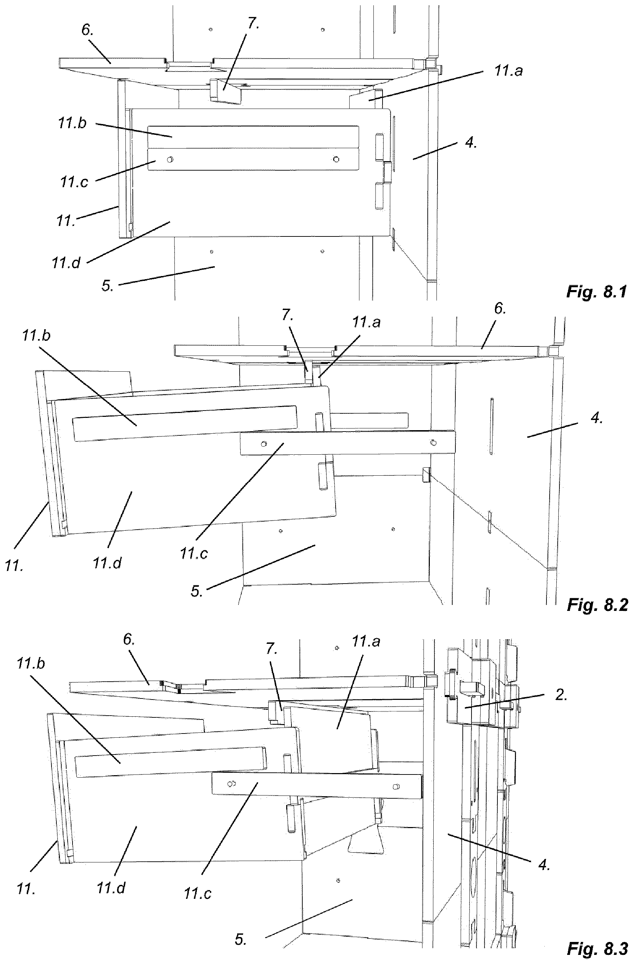

In fig. 8.1 is seen in vertical section/perspective, a drawer (11.) in a closed drawer position mounted within 2 vertically interlocked shelf modules with drawer slides (11.b) mounted on the side panel boards (11.d) of the drawer (11.), in which the drawer (11.) is lifted into the shelf module on the corresponding drawer slides (11.c) mounted on the side of the load bearing boards (5.). The back panel board (11.a) of the drawer (11.) has a height which is greater than the side panel boards (11.d) of the drawer (11.) and higher than the underside of the supporting beam (7.) of the shelf module.

In fig. 8.2 is seen in a vertical section/perspective, in which the mounted drawer slides (11.b) of the drawer (11.) tip slightly forwards when pulling out the drawer (11.) on the drawer slides (11.c) of the load bearing boards (5.), whereby the height of the back panel board (11.a) of the drawer (11.) touches the supporting beam (7.) of the shelf module and is thus blocked, thereby preventing an unintentional full pull-out of the drawer (11.)

In fig. 8.3 is seen obliquely from behind in perspective, the same position as shown in fig. 8.2.

## Claims

1. A shelf module and an associated suspension bracket in board material intended to be fixed on to a vertical surface and where the shelf module comprises of a rear panel board (4.), a load bearing board (5.) and a shelf board (6.), of which the load bearing board (5.) and the shelf board (6.) are attached perpendicularly to the front of the rear panel board (4.) in a vertical and horizontal position respectively, **characterized by** that the rear panel board (4.) comprises of a number of horizontally and a number of vertically elongated mortises (4.a), which are placed with the long sides of these perpendicular to the edges of the rear panel board (4.) and that the suspension bracket (2.) is placed on the back side of the rear panel board (4.) and includes a number of similar and corresponding mortises (2.b) and that the load bearing board (5.) includes grip tenons (5.a) intended for insertion into the vertical mortises of the rear panel board (4.) and into a shelf board slot (5.f) and that the shelf board (6.) includes pinch tenons (6.a) for insertion into the horizontal mortises of the rear panel board (4.) and a load bearing panel slot (6.e) and where the shelf board slot (5.f) and the load bearing board slot (6.e) are intended to interlock.

2. A shelf module and an associated suspension bracket in board material according to claim 1, **characterized by** that on the board surface of the suspension bracket (2.), is attached one or more spacers (2.e) with a board size smaller than the board size of the suspension bracket (2.), so when both are fixed to a vertical surface, a gap (2.g) is formed between the suspension bracket (2.) and the vertical surface onto which the suspension bracket (2.) is fixed.

3. A shelf module and an associated suspension bracket in board material according to claims 1 - 2, **characterized by** a partial expansion in the board material in the form of a dovetail lap (2.c) at the outermost part of the associated suspension bracket (2.) in the same directions as the mortises (2.b) of the suspension bracket (2.), formed with a neck which is narrow at the attachment of the dovetail lap (2.c) at the suspension bracket (2.) and where the dovetail lap (2.c) has an edge recess (2.d) in the board material along the edges of the dovetail laps (2.c).

4. A shelf module and an associated suspension bracket in board material according to claims 1 - 3, **characterized by** that a spacer bracket (3.) are attached to the dovetail laps (2.c) of the suspension bracket (2.) by a cutout in two opposite sides of the spacer bracket (3.) in the shape of dovetails (3.a), which form the geometrically mirrored shape of the dovetail laps (2.c) of the suspension bracket (2.) and the edge recesses (2.d) of the dovetail laps (2.c).

5. A shelf module and an associated suspension bracket in board material according to claims 1 - 4, **characterized by** that the load bearing board (5.)has a number of partial extensions in the surface of the board material, positioned and in dimensions fitting the mortises (4.a) of the rear panel board (4.) and the mortises (2.b) of the suspension bracket (2.), made in the form of grip tenons (5.a) with cut outs that form a gooseneck (5.b) on each grip tenon (5.a), where the cut out at each gooseneck (5.b) has a width corresponding to the total board thickness of the rear panel board (4.) and the suspension bracket (2.) combined.

6. A shelf module and an associated suspension bracket in board material according to claims 1 - 5, **characterized by** that each grip tenon (5.a) has, in the inner vertical cut of its gooseneck (5.b), a slight expansion in a partial area of the edge of the board material in the form of a grip tenon bulge (5.c).

7. A shelf module and an associated suspension bracket in board material according to claims 1 - 6, **characterized by** that the shelf board (6.) has a number of partial extensions in the edge of the board material in the form of pinch tenons (6.a), positioned and with dimensions fitting to the mortises (4.a) of the rear panel board (4.) and the mortises (2.b) of the suspension bracket (2.).

8. A shelf module and an associated suspension bracket in board material according to claims 1 - 7, **characterized by** that each of the pinch tenons (6.a) has, on one or both sides thereof, a slight expansion in a partial area of the edge of the material in the form of a pinch tenon bulge (6b).

9. A shelf module and an associated suspension bracket in board material according to claims 1 - 8, **characterized by** that the load bearing board (5.) has a vertical cutout in the form of a beam slot (5.g), with an upper edge corresponding to the lower edge of the shelf board slot (5.f) of the load bearing board (5.).

10. A shelf module and an associated suspension bracket in board material according to claims 1 - 9, **characterized by** that a beam is made in the form of a supporting beam (7.) in a length corresponding to at least the center distance between the load bearing boards (5.) of two juxtaposed shelf modules in a board thickness corresponding to the width of a shelf beam slot (5.g).

11. A shelf module and an associated suspension bracket in board material according to claims 1 - 10, **characterized by** that at the bottom and top or either at the bottom and top of each load bearing board (5.), there is a cutout in the board material in the shape of a dovetail (5.h), which has a neck which is narrow in width at the board edge and made with an edge recess (5.i) in the board material along the edges of the dovetails (5.h).

12. A shelf module and an associated suspension bracket in board material according to claims 1 - 11, **characterized by** that at the opposite edges or either on one edge of the shelf board (6.), there is a cutout in the board material in the shape of a dovetail (6.f), which has a neck that is narrow in width at the board edge and made with an edge recess (6.g) in the board material along the edges of the dovetails (6.f).

13. A shelf module and an associated suspension bracket in board material according to claims 1 - 12, **characterized by** a piece of board in the shape of a butterfly key (8.), which form the geometrically inverted figure of two juxtaposed dovetails (5.h) or (6.f) and their edge recesses (5.i) or (6.g).

14. A shelf module and an associated suspension bracket in board material according to claims 1 - 13, **characterized by** that the rear panel board (4.) has a cutout in the form of a cable slot (4.b) in one or more of the edges of the rear panel board (4.), which are positioned opposite the short sides of the elongated mortises (4.a) in the rear panel board (4.), in such a way that board material is retained in the rear panel board (4.) between the cable slots (4.b) and the mortises (4.a).

15. A shelf module and an associated suspension bracket in board material according to claims 1 - 14, **characterized by** that the load bearing board (5.) and the shelve board (6.) are made with cutouts in the form of a cable corner (5.e) and (6.d) on one or both sides of the corners of the load bearing board (5.) and the shelve board (6.) towards the edge where the grip tenons (5.a) of the load bearing board (5.) and the pinch tenons (6.a) of the shelve board (6.) are positioned.
